# EUROPÄISCHE PATENTANMELDUNG

(11) **EP 2 913 938 A1**
(43) Veröffentlichungstag der Anmeldung: **02.09.2015**
(21) Anmeldenummer: 14156778.4
(22) Anmeldetag: 26.02.2014
(51) Int. Cl.: H04B 5/00, G06F 12/10, G06F 17/30

(54) **Verfahren und Anordnung zum Zugriff auf Informationen eines drahtlos zugreifbaren Datenträgers**

(71) Anmelder: Siemens Aktiengesellschaft, 80333 München (DE)
(72) Erfinder: Ermler, Rene, 91058 Erlangen (DE); Kiesel, Bruno, 91058 Erlangen (DE); Neidig, Jörg, Dr., 90419 Nürnberg (DE); Weinländer, Markus, 91230 Happurg (DE)

(57) **Zusammenfassung**

Die Erfindung betrifft ein Verfahren und eine Anordnung zur Adressierung von auf einem drahtlos zugreifbaren Datenträger gespeicherten Informationen, wobei mittels eines Schreib-Lesegerätes (RFID-Reader) aus einem Datenspeicher des Datenträgers die Informationen ausgelesen und an eine industrielle Steuerung übermittelt werden, oder umgekehrt. Dabei umfassen Die Informationen mehrere Datenfelder, die jeweils in festgelegten Speicherzellen des Datenspeichers gespeichert oder aus diesen ausgelesen werden, wobei für die Datenfelder jeweils ein Symbol verwendet wird, wobei in zumindest einer Querverweistabelle (QT) den Symbolen der Datenfelder jeweils eine Identifizierung (SID) zugeordnet ist, und wobei in zumindest einer Positionstabelle (PT) den Identifizierungen jeweils eine Adresse oder ein Adressbereich der festgelegten Speicherzellen, die für das jeweilige Datenfeld vorgesehen sind, zugeordnet ist. Zum Zugriff auf die Informationen verwendet eine Anwendung eine Anforderung mit dem Symbol, wonach mittels der Querverweistabelle (QT) die dem Symbol entsprechende Identifizierung (SID) bestimmt wird, wonach mittels der Positionstabelle (PT) aus dieser Identifizierung (SID) die Adresse oder der Adressbereich dieses Datenfeldes ermittelt wird, und wonach anhand der ermittelten Adresse oder des ermittelten Adressbereichs die Informationen auf dem Datenträger zugegriffen werden.

## Beschreibung

Die Erfindung betrifft ein Verfahren zur Adressierung von auf einem drahtlos zugreifbaren Datenträger gespeicherten Informationen gemäß dem Oberbegriff des Patentanspruchs 1, und eine Anordnung zum Zugriff auf Informationen eines drahtlos zugreifbaren Datenträgers gemäß Patentanspruch 10.

Industrielle Identifikationssysteme auf Basis von RFID (Radio Frequency Identification) werden in Produktionsanlagen u.a. zur Steuerung des Produktionsprozesses eingesetzt; ein Beispiel ist die Automobilindustrie, wo mittels der RFID-Datenträger an den verschiedenen Bearbeitungsstationen oder Produktionszellen, beispielsweise beim Lackieren, der jeweilige Bearbeitungsschritt gesteuert wird. Dabei werden auf dem zu identifizierenden Produktionsgut Datenträger, so genannte RFID-Transponder (kurz: Tag), angebracht, die mit entsprechenden Lesegeräten an jeder Produktionszelle ausgelesen werden können. Aus verschiedenen Gründen setzt sich zunehmend die Vorgehensweise durch, auf dem Datenträger nicht nur eine reine Identifikationsnummer zu hinterlegen, sondern auch die Information, welche Fertigungsschritte mit welchen Parametern an dem Produktionsgut durchgeführt werden sollen. So kann beispielsweise in der Automobilfertigung an der Karosse ein Datenträger mit der Information hinterlegt werden, welche Lackfarbe für dieses Auto verwendet werden soll. Dazu stellen die Transponder einen unstrukturierten Datenspeicher zur Verfügung.

Bei komplexen Anlagen oder auch dann, wenn Zulieferer beteiligt sind, ist das Festlegen und Planen der Datenstruktur, die angibt wie diese Informationen auf dem RFID-Transponder abgelegt oder strukturiert werden sollen, aufwändig und fehleranfällig. Heutzutage wird eine Liste mit allen zu speichernden Daten angefertigt, wobei für jedes Datum die exakte Speicheradresse auf dem Transponder festgelegt wird, an welcher die Daten physikalisch abgelegt werden. Diese Struktur muss dann von den Programmierern der Automatisierungsfunktion herangezogen werden, wenn sie für diese Automatisierungsfunktion Informationen aus dem Transponder benötigen. D.h., dass in den Programmen zwangsläufig direkte Zugriffe auf Speicheradressen der Datenträger beziehungsweise RFID-Transponder entsprechend einer Liste implementiert werden. Das Problem wird also bislang mit von Hand gepflegten Tabellen, typischerweise auf Basis eines Tabellenkalkulationsprogramms, gelöst, wobei diese Tabelle allen beteiligten Partnern zur Verfügung gestellt werden muss. Durch entsprechende Arbeitsprozesse werden dann alle beteiligten Partner dazu verpflichtet, die in der kommunizierten Tabelle beschriebene Datenstruktur zu verwenden.

Diese Vorgehensweise ist aufwändig und fehleranfällig. Das Erstellen der Liste oder Tabelle geschieht nämlich außerhalb der üblichen Engineeringwerkzeuge (Engineering-Systeme) für Automatisierungsfunktionen. Dadurch entsteht Mehrarbeit, und es können Übertragungsfehler geschehen. Wenn sich die Liste ändert, ist diese mit alle Projektbeteiligten zu synchronisieren, und alle bereits erstellten Automatisierungsprogramme sind zu überprüfen, da evtl. die Daten nunmehr an anderen Speicheradressen stehen, als ursprünglich geplant. Es ist dabei kaum nachzuverfolgen, ob alle beteiligten Zulieferer die aktuelle Datenstruktur richtig implementiert haben.

Aus diesem Grund ist es heutzutage zwingend erforderlich, dass sich ein Programmierer oder Systemintegratoren akribisch um den Zugriff auf Speicheradressen kümmert. Eigentlich ist es aus Sicht eines Programmierers unerheblich, wo oder wie die Daten gespeichert werden, solange es einen einfachen Zugriff auf die gewünschte Information gibt. Im zuvor skizzierten Beispiel wäre es also wünschenswert, wenn eine Anwendung ohne Kenntnis der Speicher-und Datenstruktur des Datenträgers sicher und einfach auslesen könnte, in welcher Farbe die nächste Karosse lackiert werden muss.

Es ist daher eine Aufgabe der vorliegenden Erfindung, die Zugriffe auf Informationen, die auf drahtlosen Datenträgern gespeichert sind, zu vereinfachen und dabei insbesondere die Beachtung der Speicherstruktur der Datenträger zu vereinfachen und weniger fehleranfällig zu gestalten.

Es ist ein Kerngedanke der erfindungsgemäßen Lösung dieser Aufgabe, ein System zur Entkopplung der physischen Speicherung auf dem Datenträger von der logischen Benutzung dieser Informationen mittels einer industriellen Anwendung (SPS-Programm) vorzuschlagen und damit eine zugriffsoptimierte Datenablage auf dem Datenträger zu ermöglichen.

Die Aufgabe wird insbesondere durch ein Verfahren gemäß dem Patentanspruch 1 und durch eine Anordnung gemäß dem Patentanspruch 10 gelöst.

Dabei wird ein Verfahren zur Adressierung von auf einem drahtlos zugreifbaren Datenträger gespeicherten Informationen vorgeschlagen, wobei mittels eines Schreib-Lesegerätes aus einem Datenspeicher des Datenträgers die Informationen ausgelesen und an eine industrielle Steuerung übermittelt werden, oder umgekehrt. Dabei umfassen die Informationen mehrere Datenfelder, die jeweils in festgelegten Speicherzellen des Datenspeichers gespeichert oder aus diesen ausgelesen werden, wobei für die Datenfelder jeweils ein Symbol (z.B. eine Variable o.ä.) verwendet wird. In zumindest einer Querverweistabelle ist den Symbolen der Datenfelder jeweils eine Identifizierung zugeordnet, und weiter ist in zumindest einer Positionstabelle den Identifizierungen jeweils eine Adresse oder ein Adressbereich der festgelegten Speicherzellen, die für das jeweilige Datenfeld vorgesehen sind, zugeordnet. Eine Anwendung verwendet zum Zugriff auf die Informationen eine Anforderung (z.B. eine Abfragenachricht oder ein Befehl) mit dem Symbol, wonach mittels der Querverweistabelle die dem Symbol entsprechende Identifizierung bestimmt wird, wonach mittels der Positionstabelle aus dieser Identifizierung die Adresse oder der Adressbereich dieses Datenfeldes ermittelt wird, so dass anhand der ermittelten Adresse oder des ermittelten Adressbereichs die Informationen auf dem Datenträger zugegriffen werden.

Durch dieses Verfahren ist es möglich, die physische Speicherung von Informationen auf dem Datenträger von der logischen Benutzung der Informationen durch die Anwendung (SPS-Programm) zu entkoppeln. Der Anwender, der die industrielle Anwendung erstellt oder programmiert, wird von der Aufgabe befreit, zusätzlich zu seiner Applikationslogik auch noch den Speicher des Datenträgers verwalten zu müssen. Fehlerquellen, die bei der Übertragung des Speicherlayouts (Tabelle) und bei der notwendigen Koordinierung zwischen mehreren Projektbeteiligten entstehen, werden vermieden. Ein weiterer Vorteil besteht darin, dass Anwendungen (SPS-Programme) auch ohne Wissen der genauen Speicherung der Information geschrieben, getestet und wiederverwendet werden können. Beim Einsatz mehrerer lokaler Anwendungen werden diese bezüglich des Zugriffs auf Informationen der Datenträger voneinander entkoppelt, das heißt, dass für lokale Anwendungen auch zusätzliche oder andere Daten verwendet werden können, ohne dass dies eine Auswirkung auf die anderen Anwendungen hat.

Außerdem wird zur Lösung der Aufgabe eine Anordnung zum Zugriff auf Informationen eines drahtlos zugreifbaren Datenträgers vorgeschlagen, wobei eine industrielle Steuerung mit einem Schreib-Lesegerät kommunikativ verknüpft ist, wobei die industrielle Steuerung mit einem RFID-Systembaustein und mit einer industriellen Anwendung programmiert ist, und wobei der RFID-Systembaustein zur Kommunikation mit dem Schreib-Lesegerät eingerichtet ist. Die Anwendung ist dabei für den Zugriff auf die Informationen zum Austausch von Anweisungen und Daten mit dem RFID-Systembaustein eingerichtet, wobei die Adressierung der gewünschten Daten anhand von Symbolen erfolgt, wobei weiterhin der RFID-Systembaustein zur Verwendung einer Querverweistabelle zur Umwertung der Symbole in Identifizierungen und das Schreib-Lesegerät oder der RFID-Systembaustein zur Verwendung einer Positionstabelle zur Umwertung der Identifizierungen in Adressinformationen zur Adressierung der Informationen des Datenträgers eingerichtet ist.

Durch eine solche Anordnung lassen sich die bereits anhand des Verfahrens erläuterten Vorteile realisieren.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Anordnung. Die beschriebenen vorteilhaften Ausgestaltungen können sowohl einzeln, als auch in Kombination miteinander realisiert sein.

Vorteilhaft wird als die Identifizierung eine Identifizierungsnummer oder ein hexadezimaler Code, eine sog. "Symbol-ID" ("Symbol-Identification"), kurz SID, verwendet. Eine solche Identifizierung benötigt nur wenig Speicherplatz und lässt sich leicht in eindeutiger Weise erzeugen.

Als das Symbol wird vorteilhaft eine funktionale Bezeichnung oder ein in der Anwendung verwendeter Variablenname verwendet. Dies macht es einem menschlichen Benutzer, insbesondere einem Programmierer oder Anwendungs-Ingenieur, leicht, übersichtlichen Programmcode zu erzeugen; zudem hat diese "humane Lesbarkeit" auch Vorteile bei der Fehlerbereinigung ("Debugging") von Anwendungen.

Vorteilhaft wird in einer ausgedehnten Automatisierungsanordnung, die aus einer Mehrzahl lokaler Anwendungen, Verarbeitungsstationen und dergleichen besteht, eine Mehrzahl lokaler gültiger Symboltabellen verwendet, die aus einer globalen "Mastertabelle" abgeleitet sind. In diesen lokal gültigen Symboltabellen sind lokal verwendete Symbole mit den Symbolen der Mastertabelle (globale Symbole) verknüpft. Es ist dabei von Vorteil, dass damit lokal eigene Symbole verwendet werden können, ohne die Konsistenz mit anderen Anwendungen zu gefährden, die eigene Symbole und Bezeichnungen verwenden. Dies ermöglicht es insbesondere, bereits vorhandenen Programmcode mit bereits verwendeten (lokalen) Symbolen weiter zu verwenden, ohne die lokal verwendeten Symbole ändern zu müssen. Anhand der lokalen Symboltabellen können dann lokale Querverweistabellen erzeugt werden, wobei insbesondere von Vorteil ist, dass die lokalen Querverweistabellen nur die lokal verwendeten Symbole und damit Informationen abbilden müssen. Dies bedeutet, dass die lokalen Querverweistabellen regelmäßig bedeutend weniger Einträge aufweisen, als die Mastertabelle. In einfachen Anordnungen, in denen keine lokal verschiedenen Symbole verwendet werden, kann die Querverweistabelle zumindest abschnittsweise mit der Mastertabelle identisch sein.

Vorteilhaft werden die Mastertabelle und die Symboltabellen mittels eines Engineering-Systems erzeugt und verwaltet. Damit ist beispielsweise gewährleistet, dass die Identifizierungen systemweit eindeutig sind.

Vorteilhaft ist in einer industriellen Automatisierungsanordnung eine Mehrzahl verschiedener Positionstabellen vorgesehen. Dies ist zum Beispiel dann von Vorteil, wenn verschiedene Arten von Datenträgern oder verschiedene Versionen von Speicherstrukturen gleichzeitig zum Einsatz kommen sollen. Es muss lediglich sichergestellt werden, dass für einen Zugriff auf die Informationen, also beispielsweise beim Auslesen von Daten, die gleiche Positionstabelle zum Einsatz kommt, die auch beim Schreiben der Daten eingesetzt wurde. Dies kann durch verschiedene Verfahren bewerkstelligt werden. So ist es beispielsweise möglich, jeder systemweit eingesetzten Positionstabelle eine eindeutige Versionsnummer zuzuordnen, wobei die zu verwendende Positionstabelle beziehungsweise deren Versionsnummer aus einem Speicherfeld des Datenträgers ausgelesen werden kann. Es kann auch eine systemweit zugreifbarer Tabelle vorgesehen werden, in der Identifizierungsmerkmale der Datenträger den verschiedenen Positionstabellen zugeordnet sind. Im einfachsten Fall wird die Positionstabelle auf dem jeweiligen Datenträger gespeichert, so dass bei einem Zugriff zuerst die Positionstabelle ausgelesen wird, wonach dann in einem zweiten Schritt die gewünschten Daten gelesen oder geschrieben werden können.

Das vorstehend beschriebene Verfahren und dessen Ausgestaltungen sind besonders vorteilhaft mit solchen Datenträgern einsetzbar, die als UHF-RFID-Transponder ausgeführt sind.

Ausführungsbeispiele des erfindungsgemäßen Verfahrens werden nachfolgend anhand der Zeichnungen erläutert. Diese Ausführungsbeispiele dienen gleichzeitig der Erläuterung einer erfindungsgemäßen Anordnung.

Dabei zeigen:
- Figur 1: eine Anordnung aus RFID-Transponder als Datenträger, ein RFID-Lesegerät als Schreib-Lesegerät und eine industrielle Steuerung mit einer Datenhaltung, die dem Stand der Technik entspricht,
- Figur 2: in schematischer Darstellung die Generierung und Verteilung der für das Verfahren benötigten Tabellen,
- Figur 3: Beispiele für eine Mastertabelle, Symboltabelle, Querverweistabelle und Positionstabelle,
- Figur 4: ein erstes Beispiel für den Informationsfluss beim Zugriff auf gespeicherte Informationen, und
- Figur 5: ein zweites Beispiel für den Informationsfluss beim Zugriff auf gespeicherte Informationen.

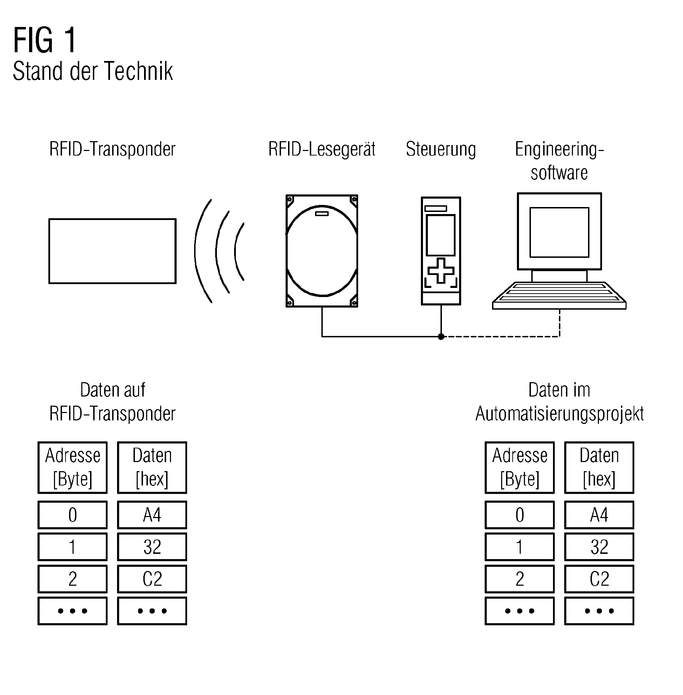

In der Figur 1 ist als Datenträger ein RFID-Transponder schematisch abgebildet, wobei in einer Tabelle die auf diesem gespeicherten Informationen (Daten) und die Adressen dieser Informationen dargestellt sind. Dieser Datenträger wird von einem Schreib-Lesegerät (RFID-Lesegerät) ausgelesen, wobei diese Daten an eine Anwendung übertragen werden, die auf einer industriellen Steuerung (speicherprogrammierbare Steuerung - SPS) abläuft. In einer zweiten Tabelle werden die ausgelesenen Daten gezeigt, wie sie in einem Automatisierungsprojekt vorliegen. Es ist zu beachten, dass bei dieser Anordnung, die dem Stand der Technik entspricht, sowohl seitens des Datenträgers beziehungsweise des auslesenden Schreib-Lesegerätes, als auch auf Seiten der Anwendung die Daten in einem hexadezimalen Rohformat vorliegen und auch anhand physikalischer Adressen (Bytes) adressiert werden.

RFID-Transponder verfügen dabei über einen unstrukturierten Datenspeicher, der mit Hilfe des RFID-Lesegeräts ausgelesen und beschrieben werden kann. Für das Auslösen des Lese- oder Schreibvorgangs wird dem RFID-Lesegerät von der Anwendung (SPS-Programm) die Anfangsadresse und Länge des zu lesenden Speicherbereichs mitgeteilt. Als Ergebnis wird eine 1:1-Kopie der unstrukturierten Daten auf dem Datenträger in einen Datenbaustein DB in der Anwendung (speicherprogrammierbare Steuerung) kopiert. Der Anwender führt nun lokale, direkte Speicherzugriffe auf diesen Datenbaustein durch, um an die gewünschten Daten zu gelangen. Struktur und Bedeutung der Daten werden nicht im Automatisierungsprojekt gehalten, sondern typischerweise in einer Excel-Tabelle. Beim Schreiben der Daten gilt dasselbe in umgekehrter Reihenfolge.

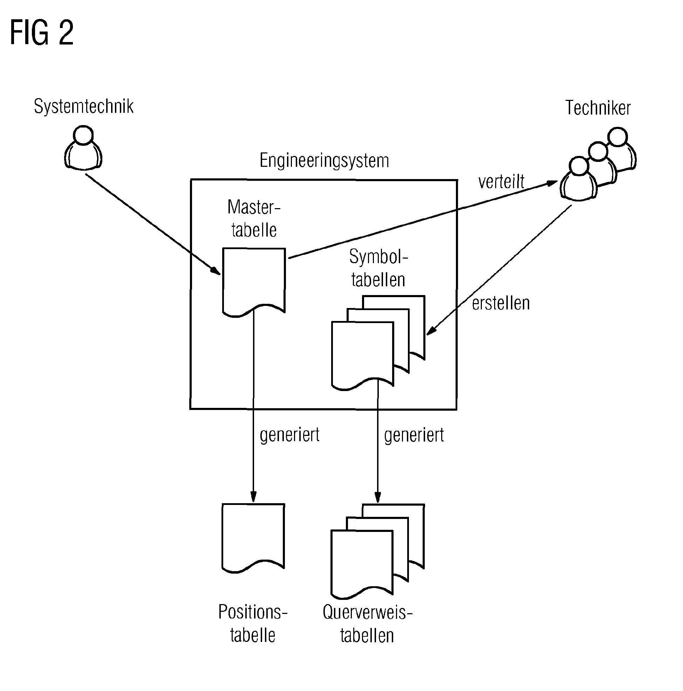

In der Figur 2 ist schematisch dargestellt, welche Tabellen in welcher Verantwortung für das erfindungsgemäße Verfahren erstellt werden. Dabei ist zu beachten, dass für eine einfache Ausführungsform des Verfahrens lediglich eine Querverweistabelle und eine Positionstabelle erforderlich ist; die zusätzlich dargestellten Symboltabellen und die Mastertabelle kommen in einer vorteilhaften Ausgestaltung zum Einsatz. Es ist weiterhin zu beachten, dass die benötigten Tabellen nicht zwingend von einem Angestellten der Systemtechnik oder einem Techniker erstellt oder verteilt werden müssen; im konkreten Einzelfall können auch andere Personen oder Einrichtungen die Erstellung, Verteilung und Verwaltung der benötigten Tabellen gewährleisten.

Im Folgenden soll davon ausgegangen werden, dass das erfindungsgemäße Verfahren auf einer Anordnung abläuft, die der Darstellung aus der Figur 1 entspricht.

Das hier vorgeschlagene erfindungsgemäße System sieht eine zweistufige Umsetzung von Symbolen, also symbolischen Namen, Variablen oder dergleichen, die ein Programmierer oder Anwender verwendet, auf eine Position beziehungsweise Adresse oder Adressbereich im Datenträger (RFID-Tag; Transponder) vor. Den Kern stellt eine zentrale Mastertabelle MT dar, die alle symbolischen Variablen des Kontextes (z.B. einer Fertigungshalle) enthält, die auf einem RFID-Tag gespeichert werden können. Es wird für das System zwischen der Engineering- und der Runtime-Sicht unterschieden.

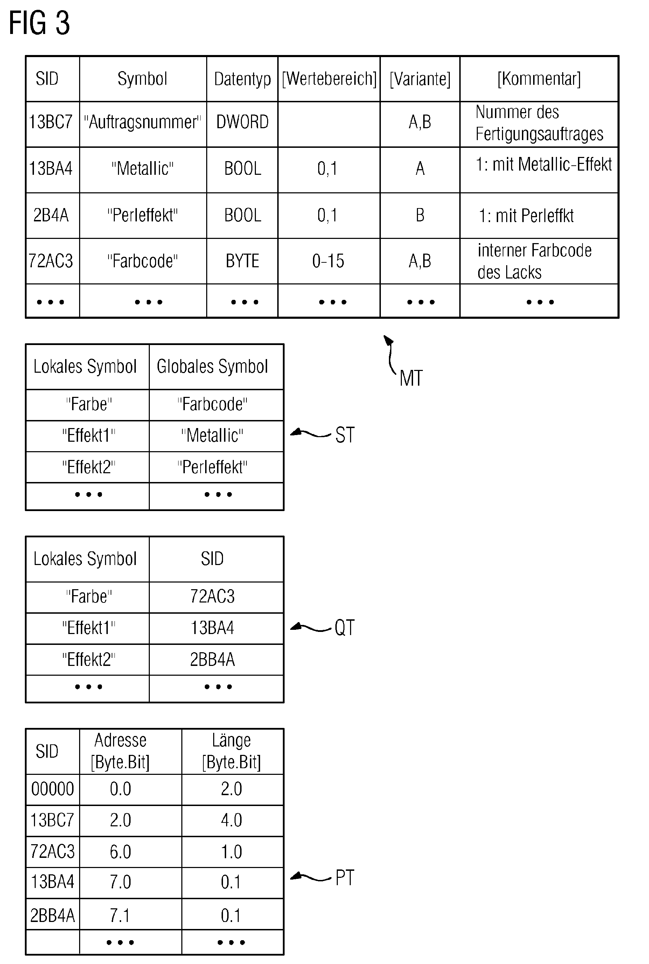

In der Figur 3 sind Beispiele für die vier im folgenden verwendeten Tabellen dargestellt, wobei jedoch für den Zugriff auf die Daten im Produktivbetrieb der Anordnung nur die Querverweistabelle QT und die Positionstabelle PT zum Einsatz kommen.

In einem ersten Schritt erstellt die Systemtechnik einmal zentral eine sogenannte Mastertabelle MT mit der Liste der Daten, die auf den im System zu verwendenden Datenträgern (RFID-Transponder) gespeichert werden sollen. Diese unsortierte Tabelle enthält für jede Zeile (= Variable) ein Symbol (symbolische Bezeichnung, z.B. "Auftragsnummer"), eine eindeutige Identifizierung (SID, z.B. "13BC7") des Symbols, und einen Datentyp (z.B. "DWORD"). Optional können weitere Attribute wie zum Beispiel ein Wertebereich hinzugefügt werden (siehe Tabelle MT). Dabei wird nicht spezifiziert, wo diese Daten im Speicher der Anwendung (SPS) oder des Datenträgers (Transponders) abgelegt werden. Diese Mastertabelle MT wird direkt innerhalb des Engineeringsystems erstellt und dort weiter verarbeitet.

In einem zweiten Schritt generiert das System aus dieser Mastertabelle MT automatisch eine Positionstabelle PT. Diese beschreibt für jedes Symbol bzw. dessen Identifizierung (SID) die Position (Start-Adresse) auf dem Datenträger und die Länge des Eintrags. Weiterhin enthält die Positionstabelle PT eine Versionsnummer (zum Beispiel mit einer fest definierten und reservierten Identifizierung (SID)), die immer dann erhöht wird, wenn sich die Positionstabelle ändert. Diese Versionsnummer wird auch auf dem Datenträger gespeichert und beim Lesen des Datenträgers genutzt, um sicherzustellen, dass die Dekodierung der Daten mit der "richtigen" Positionstabelle PT erfolgt. Die Daten sind in dieser auch als "Mappingtabelle" bezeichneten Positionstabelle PT nicht notwendigerweise in derselben Reihenfolge wie in der Mastertabelle MT aufgeführt. Stattdessen kann das System die Speicherablage nach verschiedenen Gesichtspunkten optimieren. Die Tabelle kann gesperrt werden, d.h., dass die enthaltenen Information nur für das System und nicht für den Anwender relevant sind und damit für diesen auch nicht sichtbar sein müssen.

In einem dritten Schritt stellt das System allen Projektbeteiligten direkt die Mastertabelle MT zur Verfügung. Damit entfällt die Notwendigkeit, die Struktur über ein externes Werkzeug zu verwalten. Übertragungsfehler bei der Umsetzung im Automatisierungsprogramm können nicht mehr auftreten.

In einem vierten Schritt erstellen alle Projektbeteiligten jeweils auf Basis der Mastertabelle MT eine lokale Symboltabelle ST mit denjenigen Symbolnamen, mit denen sie auf die Variablen der Anordnung beziehungsweise des RFID-Systems zugreifen möchten. Diese jeweiligen Symboltabellen ST enthalten im Kern ein Mapping von lokalen Symbolen (z.B. Karosseriefarbe) auf einen Eintrag (z.B. Farbcode) in der Mastertabelle MT. Die Anzahl der Zeilen in der lokalen Symboltabelle ST ist in der Regel deutlich kleiner als die der globalen Mastertabelle MT, da für die lokale Automatisierungsaufgabe typischerweise nicht alle verfügbaren Daten benötigt werden. Der Programmierer kommt somit zu keinem Zeitpunkt mit dem physikalischen Speicherort auf dem Datenträger in Berührung. Durch die Entkopplung mit der lokalen Symboltabelle ST kann die zentrale Mastertabelle MT auch ohne Rückwirkungen auf bestehende Programmbausteine sowohl um weitere Variablen als auch um neue Attribute erweitert werden. Der Programmierer der lokalen Anwendung muss seinen Code nur anpassen, wenn er eine neue Variable verwenden möchte.

In einem fünften Schritt generiert das System automatisch jeweils aus der Symboltabelle ST und der Mastertabelle MT eine Querverweistabelle QT. Diese Querverweistabelle QT enthält die jeweiligen lokalen Symbole und die entsprechende Identifizierung SID aus der Mastertabelle MT. Analog zur Positionstabelle PT kann auch diese Verweistabelle gesperrt werden, d.h., dass die enthaltene Informationen nur für das System und nicht für den Anwender relevant ist.

Die zuvor beschriebenen Verfahrensschritte zur Erzeugung der Tabellen aus der Figur 3 sind dem so genannten Engineering zuzuordnen. Danach können alle Projektbeteiligten ihre lokale Automatisierungsfunktionen rückwirkungsfrei implementieren. Dabei verwenden sie beim Zugriff auf die Informationen (RFID-Daten) ausschließlich die lokalen Symbole, die in der Symboltabelle ST definiert sind. Ergänzungen oder Verschiebungen in der Mastertabelle oder in Funktionen anderer Projektbeteiligter haben keine Auswirkung auf das lokale Programm. Darüber hinaus soll darauf hingewiesen werden, dass die Reihenfolge der Einträge (Zeilen) in den Tabellen MT, ST, QT, PT unerheblich ist. Soweit also darauf hingewiesen wird, dass für die Auflösung der Adressierung beim Zugriff auf einen Datenträger beim Schreiben und beim Lesen jeweils die gleiche Positionstabelle PT verwendet werden soll, heißt dies lediglich, dass für die jeweils zugegriffenen Daten übereinstimmende Tabelleneinträge vorhanden sein müssen; darüber hinaus können jedoch auch weitere Einträge jeweils vorhanden sein, die nicht zwangsläufig übereinstimmen können oder müssen, darüber hinaus ist die jeweilige Reihenfolge der Tabelleneinträge unerheblich und kann für Optimierungen auch jeweils derart geändert werden, dass häufig benutzte Einträge an den Anfang der Tabelle sortiert werden.

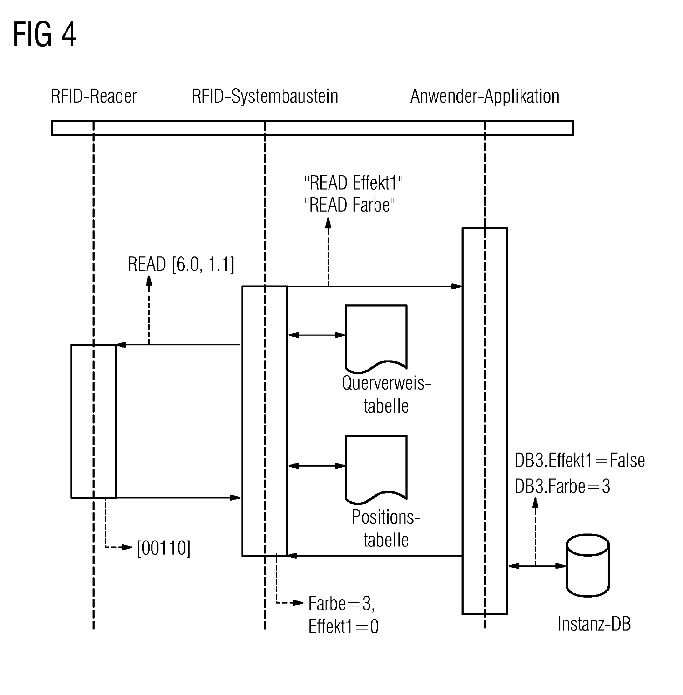

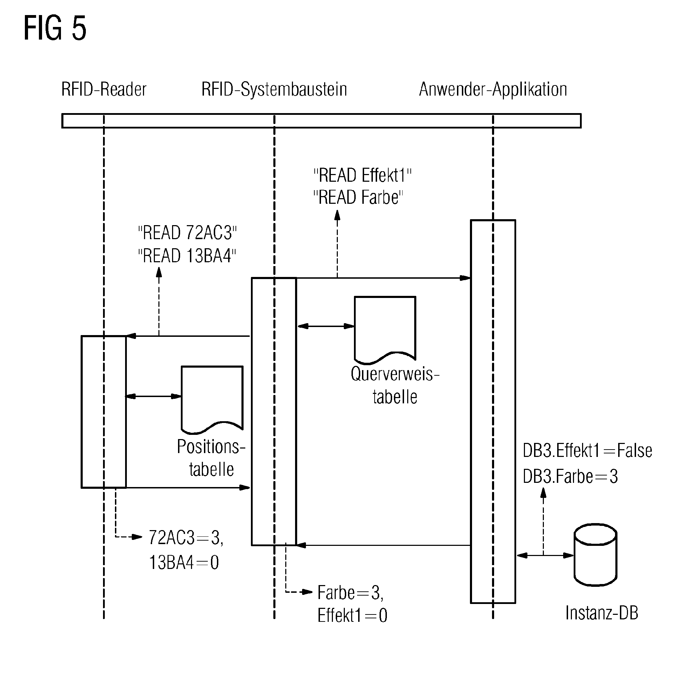

Die Figur 4 zeigt eine erste Realisierungsvariante für den erfindungsgemäßen indirekten Zugriff auf die Informationen. In der Figur sind dabei zur Erläuterung so genannte Pseudo-Befehle ("READ xyz") und die entsprechenden Antwortnachrichten exemplarisch dargestellt. Dasselbe gilt auch für die später diskutierte Figur 5. Für das hier erläuterte Beispiel sei angenommen, dass auf einer Hardware-Plattform, also einer Automatisierungskomponente beziehungsweise einer industriellen Steuerung (SPS) die Anwendung (Anwender-Applikation) und ein Software-Modul zum Zugriff auf die drahtlosen Datenträger, ein so genannter RFID-Systembaustein, ablaufen. In anderen Ausführungsformen können diese beiden Software-Module auch auf unterschiedlichen Hardware-Plattformen ablaufen. Weiter sei angenommen, dass die industrielle Steuerung Zugriff auf ein Schreib-Lesegerät, in der Figur als RFID-Reader bezeichnet, hat. Die anhand der Figur 4 beschriebene Realisierungsvariante sieht also einen RFID-Systembaustein vor, der gegenüber dem RFID-Reader wie auch im Stand der Technik mit Byte-Arrays arbeitet, gegenüber der Anwendung (SPS-Software; in der Figur als Anwender-Applikation bezeichnet) jedoch mit den vom Programmierer erstellten Symbolen. Dieser RFID-Funktionsbaustein benötigt somit Zugriff auf die Querverweistabelle QT und die Positionstabelle PT, damit er die Variablen richtig kodieren und dekodieren kann. Eine Änderung an der Mastertabelle MT hat dann indirekt, nämlich über die dann neu generierte Positionstabelle PT, eine Aktualisierung dieses Software-Bausteins zur Folge. Bei dieser Variante kann ein Schreib-Lesegerät (RFID-Reader) aus dem Stand der Technik verwendet werden; insbesondere braucht das Schreib-Lesegerät keine Positionstabellen PT abrufen, auswerten oder speichern und dafür auch keine Ressourcen aufweisen.

In der Figur 5 ist eine zweite Realisierungsvariante dargestellt, welche ein "intelligenteres" Schreib-Lesegerät (RFID-Reader) verwendet, das sich vom Stand der Technik darin unterscheidet, dass es an seiner Schnittstelle zum RFID-Systembaustein mit Identifizierungen (SIDs) operieren kann. D. h., dass die Positionstabelle PT von der industriellen Steuerung in das Schreib-Lesegerät verlagert wird. Auf der industriellen Steuerung verbleibt nur die lokale Querverweistabelle QT. Der RFID-Funktionsbaustein erledigt dann nur die Umsetzung von lokalen Symbolen auf die Identifizierungen für die Lese- und Schreib-Aufträge an das Schreib-Lesegerät. Änderungen an der Mastertabelle MT wirken sich dann auf alle Schreib-Lesegeräte (RFID-Reader) und auf diejenigen Anwendungen (SPS-Programme) aus, die die neuen Variablen nutzen.

Durch die vorstehend beschriebenen Varianten der Systemarchitektur und durch den Einsatz des erfindungsgemäßen Verfahrens eröffnen sich weitere Optimierungsmöglichkeiten, die vorteilhaft in das beschriebene System integriert werden können.

Da der Ersteller der Anwenderapplikation die Speicheradresse der Nutzdaten (Informationen) auf dem Datenträger (Transponder) nicht kennt, kann er seine Lese- bzw. Schreibanfragen nicht bezüglich des Speicherzugriffs optimieren. Daher wird vorgeschlagen, dass das erfindungsgemäße System die Anfragen automatisch so sortiert, dass das Lesen bzw. Schreiben auf den Transponder-Speicher in möglichst wenigen Einzelschritten erfolgt, d.h., dass beispielsweise zusammenhängende Speicherbereiche in einem Vorgang beschrieben oder gelesen werden. Dazu muss der Anwender - wenn er mehrere Symbole abrufen möchte - den ersten und letzten Lese- bzw. Schreibbefehl markieren, so dass das System für die so verketteten Befehle den Speicherzugriff optimieren kann.

Durch eine Analyse des Produktionsbetriebs kann das System in einer weiteren vorteilhaften Variante eine optimale Anordnung der Daten auf dem Datenträger beziehungsweise Transponder vorschlagen, so dass die Menge der Speicherzugriffe weiter minimiert werden kann. Dabei beobachtet das System eine Zeit lang die Schreib-Lesevorgänge und schlägt dann der Systemtechnik eine geänderte Anordnung der Daten auf dem RFID-Transponder vor, so dass Daten, die typischerweise zusammen abgerufen werden, auch auf dem physikalischen Speicher des Datenträgers zusammenhängend abgelegt werden.

Prinzipiell ist es über den vorgeschlagenen Mechanismus auch möglich, die Daten auf dem Transponder zu komprimieren oder zu verschlüsseln. Dies führt dazu, dass aus der Positionstabelle eine beliebige "Positionsfunktion" wird, die zwischen der symbolischen Anfrage und dem entsprechenden Datenstream aus dem Transponderspeicher umrechnet.

Als weitere vorteilhafte Ausprägung kann bei der Generierung der Positionstabelle PT bereits berücksichtigt werden, welche Daten auf den Transponder geschrieben werden ("filtern"). Werden z.B. in Fertigungswerken mehrere Produkte hergestellt, sind nicht alle Daten für alle Produkte relevant. Für eine bessere Handhabbarkeit kann es nun gewünscht sein, nicht für jeden Typ neue Symbole bzw. händisch neue Strukturen vorzugeben. Vorgeschlagen wird deshalb ein Verfahren, bei dem die Systemtechnik bei der Definition der Mastertabelle MT auch angibt, für welchen Produkttyp diese relevant sind. Dies ist in der Mastertabelle MT der Figur 3 in der Tabellenspalte "Variante" exemplarisch dargestellt. Der beschriebene Generator optimiert automatisch den Speicher des Transponders abhängig von den jeweiligen Produkttypen.

Wie bereits zuvor beschrieben, kann es sinnvoll sein, in einem System unterschiedliche Positionstabellen PT zu verwenden, was insbesondere dann der Fall ist, wenn sich ein System weiter entwickelt oder wenn andere Typen von Datenträgern eingesetzt werden müssen. In bestimmten Situationen kann es daher notwendig sein, eine neue Positionstabelle PT zu generieren. Damit immer eindeutig bestimmt werden kann, welche Daten auf dem Datenträger beziehungsweise Transponder wo vorhanden sind, wird vorgeschlagen, die Positionstabelle zu versionieren und die Versionsnummer beim Beschreiben des Transponders in einem Kopffeld ("#") zu vermerken. Damit können Transponder mit verschiedenen Layoutformaten simultan benutzt werden.

Die Positionstabelle PT kann auch auf dem Datenträger (RFID-Transponder) selbst hinterlegt werden. Die Existenz der Positionstabelle PT wird dabei vorteilhaft im Header des Datenträgers vermerkt. Damit ist auch bei unbekanntem Transponder zumindest die Datenstruktur ersichtlich. In der Runtime-Variante gemäß der Figur 5 kann ein Schreib-Lesegerät automatisch seine Positionstabelle PT aktualisieren, wenn ein Datenträger mit einer Positionstabelle PT mit neuerer Versionskennung erkannt wird.

## Patentansprüche

1. Verfahren zur Adressierung von auf einem drahtlos zugreifbaren Datenträger gespeicherten Informationen,
wobei mittels eines Schreib-Lesegerätes (RFID-Reader) aus einem Datenspeicher des Datenträgers die Informationen ausgelesen und an eine industrielle Steuerung übermittelt werden, oder umgekehrt,
**dadurch gekennzeichnet,**
**dass** die Informationen mehrere Datenfelder umfassen, die jeweils in festgelegten Speicherzellen des Datenspeichers gespeichert oder aus diesen ausgelesen werden, wobei für die Datenfelder jeweils ein Symbol verwendet wird,
**dass** in zumindest einer Querverweistabelle (QT) den Symbolen der Datenfelder jeweils eine Identifizierung (SID) zugeordnet ist,
**dass** in zumindest einer Positionstabelle (PT) den Identifizierungen jeweils eine Adresse oder ein Adressbereich der festgelegten Speicherzellen, die für das jeweilige Datenfeld vorgesehen sind, zugeordnet ist,
**dass** eine Anwendung zum Zugriff auf die Informationen eine Anforderung mit dem Symbol verwendet, wonach mittels der Querverweistabelle (QT) die dem Symbol entsprechende Identifizierung (SID) bestimmt wird, wonach mittels der Positionstabelle (PT) aus dieser Identifizierung (SID) die Adresse oder der Adressbereich dieses Datenfeldes ermittelt wird, und dass anhand der ermittelten Adresse oder des ermittelten Adressbereichs die Informationen auf dem Datenträger zugegriffen werden.

2. Verfahren nach Patentanspruch 1,
**dadurch gekennzeichnet,**
**dass** als die Identifizierung (SID) eine Identifizierungsnummer oder ein hexadezimaler Code verwendet wird.

3. Verfahren nach Patentanspruch 1 oder 2,
**dadurch gekennzeichnet,**
**dass** als das Symbol eine funktionale Bezeichnung oder ein in der Anwendung verwendeter Variablenname verwendet wird.

4. Verfahren nach einem der vorhergehenden Patentansprüche,
**dadurch gekennzeichnet, dass**
insbesondere für eine Anordnung mit einer Mehrzahl von lokalen Anwendungen mit lokalen Zugriffen auf die Datenträger eine Mastertabelle (MT) mit einer Zuordnung von globalen Symbolen zu den Identifizierungen (SID) vorgesehen wird, wobei aus dieser Mastertabelle (MT) eine Anzahl lokal gültiger Symboltabellen (ST) erstellt wird, wobei in den lokal gültigen Symboltabellen (ST) für jeweils eine Anzahl der in der Mastertabelle (MT) verzeichneten globalen Symbole lokale Symbole zum lokalen Zugriff auf die zumindest eine Querverweistabelle (QT) verwendet werden.

5. Verfahren nach Patentanspruch 4,
**dadurch gekennzeichnet,**
**dass** die Mastertabelle (MT) und die Symboltabellen (ST) mittels eines Engineering-Systems erzeugt und verwaltet werden.

6. Verfahren nach einem der vorhergehenden Patentansprüche,
**dadurch gekennzeichnet,**
**dass** in einer industriellen Automatisierungsanordnung eine Mehrzahl verschiedener Positionstabellen (PT) vorgesehen wird.

7. Verfahren nach Patentanspruch 6,
**dadurch gekennzeichnet,**
**dass** jeder der Positionstabellen (PT) eine eindeutige Versionsnummer zugeordnet wird, die aus dem jeweils zuzugreifenden Datenträger auslesbar oder anhand einer Identifizierungsnummer (SID) des Datenträgers ermittelbar ist, wobei von dem Schreib-Lesegerät anhand der Versionsnummer die jeweils zu verwendende der Positionstabellen (PT) ausgewählt oder aus einem Speicher abgerufen wird.

8. Verfahren nach Patentanspruch 6,
**dadurch gekennzeichnet,**
**dass** die für den zuzugreifenden Datenträger gültige Positionstabelle (PT) auf diesem zum Abruf durch das Schreib-Lesegerät gespeichert wird.

9. Verfahren nach einem der vorhergehenden Patentansprüche,
**dadurch gekennzeichnet,**
**dass** als Datenträger ein UHF-RFID-Transponder verwendet wird.

10. Anordnung zum Zugriff auf Informationen eines drahtlos zugreifbaren Datenträgers,
**dadurch gekennzeichnet,**
**dass** eine industrielle Steuerung mit einem Schreib-Lesegerät kommunikativ verknüpft ist, wobei die industrielle Steuerung mit einem RFID-Systembaustein und mit einer industriellen Anwendung programmiert ist,
**dass** der RFID-Systembaustein zur Kommunikation mit dem Schreib-Lesegerät eingerichtet ist,
**dass** die Anwendung für den Zugriff auf die Informationen zum Austausch von Anweisungen und Daten mit dem RFID-Systembaustein eingerichtet ist, wobei die Adressierung der gewünschten Daten anhand von Symbolen erfolgt,
wobei der RFID-Systembaustein zur Verwendung einer Querverweistabelle (QT) zur Umwertung der Symbole in Identifizierungen (SID) und der RFID-Systembaustein oder das Schreib-Lesegerät zur Verwendung einer Positionstabelle (PT) zur Umwertung der Identifizierungen (SID) in Adressinformationen zur Adressierung der Informationen des Datenträgers eingerichtet ist.
